Europäisches Patentamt

European Patent Office

Office européen des brevets

(19)

(11) Veröffentlichungsnummer: **0 448 751 B1**

(12) **EUROPÄISCHE PATENTSCHRIFT**

(45) Veröffentlichungstag der Patentschrift: **13.07.94**

(51) Int. Cl.⁵: **G01B 9/02**, G01D 5/26

(21) Anmeldenummer: **90105787.7**

(22) Anmeldetag: **27.03.90**

(54) **Integriertes akusto-optisches Heterodyninterferometer.**

(43) Veröffentlichungstag der Anmeldung:
**02.10.91 Patentblatt 91/40**

(45) Bekanntmachung des Hinweises auf die
Patenterteilung:
**13.07.94 Patentblatt 94/28**

(84) Benannte Vertragsstaaten:
**DE FR GB IT**

(56) Entgegenhaltungen:
**EP-A- 0 157 227**
**FR-A- 1 579 550**
**US-A- 4 188 122**

**JOURNAL OF LIGHTWAVE TECHNOLOGY, Bd.
LT-5, Nr. 7, Juli 1987, Seiten 901-905; H. TODA
et al: "Optical Integrated Circuit for a Fiber
Laser Doppler Velocimeter"**

(73) Patentinhaber: **Sohler, Wolfgang, Prof. Dr.
Wewelsburger Weg 1
D-33100 Paderborn(DE)**

(72) Erfinder: **Sohler, Wolfgang, Prof. Dr.
Wewelsburger Weg 1
D-33100 Paderborn(DE)**

(74) Vertreter: **Hanewinkel, Lorenz, Dipl.-Phys.
Patentanwalt
Ferrariweg 17a
D-33102 Paderborn (DE)**

## Beschreibung

Die Erfindung betrifft ein Heterodyninterferometer mit einem Lithiumniobatkristall auf dem ein Polarisationsteiler ausgebildet ist, von dem ausgehend sich von zwei Lichtleiterbahnen vier integrierte Lichtleiterabschnitte erstrecken, wobei ein erster Lichtleiterabschnitt der ersten Lichtleiterbahn im Betrieb randseitig des Kristalles mit einem polarisierten Laserstrahl einer Frequenz monomod gespeist wird, dessen Licht dann polarisationsgedreht und um eine Modulationsfrequenz frequenzversetzt wird, und wobei der zweite Lichtleiterabschnitt der ersten Lichtleiterbahn, der das Licht einer ersten Polarisation enthält, zu einem randseitig des Kristalles angeordneten Reflektor geführt ist und wobei von dem dritten Lichtleiterabschnitt von der zweiten Lichtleiterbahn, der das Licht der anderen Polarisation enthält, dieses Licht aus dem Kristall randseitig austretend über eine 1/4-Wellenlängenplatte auf ein reflektierendes Meßobjekt geleitet wird, wodurch, das Licht um einen Frequenzversatz seiner Bewegung entsprechend verändert wird, und wobei der vierte Lichtleiterabschnitt von der zweiten Lichtleiterbahn zu einem ersten Lichtdetektor geführt wird, dessen Detektorsignal in eine Auswertevorrichtung geleitet wird, an die ein weiterer Lichtdetektor angeschlossen ist, dem ein komplementäres Lichtsignal zugeführt wird.

Aus L.G. Suchowski et al, Proc. Intenat. Conf. on Integrated Optics and Optical Comm., 1989, S.64, 65; Miniature Fiber-Optic Laser Vibrometer Systems Utilizing Phase-Insensitive Probe and Multifunction Integrated Optic Chip, ist ein Heterodyninterferometer bekannt, bei dem Laserlicht durch ein integriertes optisches Lithiumniobat-Bauelement und anschließend über eine Lichtleiter einem reflektirenden Meßobjekt zugeführt ist, von dem es, ggf. durch eine Vibration oder eine Relativgeschwindigkeit dopplermoduliert, in den Lichtleiter reflektiert ist und dann in das optische Bauelement zurückkehrt, wo in einem ersten Strahlteiler ein erster Lichtanteil von dem zurückgespeisten Laserlicht getrennt weitergeführt ist und dieser erste Lichtanteil von einem zweiten Teiler als ein zweiter Lichtanteil in einem abgestimmten Koppler und von dort abgespalten ein dritter Lichtanteil in einem angeschlossenen Referenzlichtleiter weitergeführt ist, aus dem dieser dritte Lichtanteil in das integrierte Bauelement zurückgeführt ist, wo es von einem, mit einer Referenzfrequenz beaufschlagten Konverter erneut moduliert und dann dem genannten Koppler zugeführt ist, der die beiden einlaufenden zweiten und dritten Lichtanteile überlagert, die dann zwei Photosensoren zur Auswertung zugeleitet sind. Nachteilig sind die hohen, mehrmaligen Teilungsverluste, die Anordnung des externen 3 m langen Lichtleiters und der verwandte elektro-optische Serrodynmodulator, der wegen der erforderlichen Steilheit der Modulationsspannungsrückflanken bei hohen Frequenzen zu betreiben ist. Dadurch ist der Meßbereich insbesondere bei Geschwindigkeitsmessungen nach oben begrenzt, so daß z.B. bei einer Folgefrequenz von 1MHz eine Objektgeschwindigkeit nur bis 1m/s meßbar ist.

Weiterhin ist aus: H. Toda et al, Journal of Lightwave Technology, Vol. LT5, No. 7, July 1987, S.901-904, Optical Integrated Circuit For a Fiber Laser Doppler Velocimeter, ein integriertes optisches Heterodyninterferometer bekannt, das in einem Lithiumniobatkristall aufgebaut ist. Auch dabei erfolgt eine Aufspaltung des eintreffenden Lichtes in einen ersten Anteil, der als Referenz benutzt wird, und in einen Meßzweiganteil, der das Licht teilweise über einen Polarisationssplitter führt und dessen objektmoduliertes reflektiertes Licht in den Kristall Zurückgeleitet und durch den Polarisationssplitter abgeleitet dem anderen Referenzlichtanteil wieder zugemischt wird, der durch einen steuerbaren Polarisationskonverter geleitet, dann reflektiert und dann mit einer Referenzfrequenz in einem elektrooptischen Konverter beaufschlagt ist. Auch hierbei geht nachteilig ein Lichtanteil verloren, und die Konstruktion weist eine Kreuzung und eine verlustbehaftete Weiche und einen verlustbringenden Modenteiler auf.

Weiterhin ist das eingangs charakterisierte Interferometer aus: H. Toda, et al.; Proc. Int. Conf. on Integrated Optics and Optical Comm., 1989, S.168, 169, Integrated Optic Heterodyne Interferometer for Accurate Displacement Measurement, bekannt, das ein integriertes, optisches Heterodyninterferometer aus einem Lithiumniobat-Kristall ist, das keinen externen Referenzlichtleiter benötigt. Dabei ist das eingespeiste Laserlicht über einen elektro-optischen Serrodyn-Phasenmodulator geführt, bei dem die beiden Lichtpolarisationen um die Modulationsfrequenz herauf- bzw. heruntergesetzt werden. Ein erster Teillichtstrom ist dann in einer Weiche als Referenz abgespalten, und nach einer Reflexion an einem Spiegel am Kristallrand und einer anschließenden Polarisationskonversion in einem steuerbaren Polarisationskonverter und nach dem Durchlaufen eines Polarisators ist er einem Referenzlichtsensor zugeleitet, und der andere abgetrennte Teillichtstrom durchläuft einen Polarisationssplitter, wonach das Licht der einen Polarisation nach dem Austritt aus dem Kristall durch eine 1/4-Wellenlängen-Platte dem reflektierenden und ggf. durch Vibrationen modulierenden Objekt zugeführt ist. Das veränderte Licht läuft durch die 1/4-Wellenlängenplatte in den Kristall zurück, wo es durch den Polarisationssplitter, diesen umgekehrt durchlaufend, umgelenkt wird und mit der anderen, abgespaltenen Mode, die an einem Spiegel am Kristallrand reflektiert worden ist, wieder zusammenläuft und überlagert aus dem Kristall austritt, wo ein Lichtsensor zur Auswertung angeordnet ist. Auch hierbei werden Verluste bei der Überlagerung in Kauf genommen und ein Serrodyn-Modulator mit den oben genannten Nachteilen verwandt.

Weiterhin ist aus Electronics Letters, 1989, 25, 1583/1584, Integrated Optical, Acoustically Tunable Wavelength Filter, bekannt, auf einem Lithiumniobatkristall eine akustische Oberflächenwellenleitung durch eine seitliche Titandotation anzuordnen, in der eine optische Wellenleitung durch eine weitere Titandotation parallellaufend integriert ist. Die akustische Wellenleitung wird durch eine kammartig ineinandergeschachtelte Elektrodenstruktur durch elektrische Signale mit einer Modulationsfrequenz erregt. Endseitig der Wellenleitung sind Absorberstreifen angeordnet. Der optische Wellenleiter wird je nach der Phasenanpassung zwischen der akustischen und optischen Welle polarisationsdrehend beeinflußt, so daß davon abhängig eine beliebige Aufteilung des eingehenden polarisierten Lichtes in unterschiedliche Polarisationsanteile erreichbar ist. Darüber hinaus erbringt diese Vorrichtung einen Frequenzversatz der eingespeisten Lichtfrequenz um die Modulationsfrequenz.

Es ist Aufgabe der Erfindung, das vorstehend beschriebene Heterodyninterferometer zu vereinfachen, insbersondere weniger Bauelemente zu verwenden, bei niedrigerer Modulationsleistung einen höheren Frequenzversatz zwecks Erweiterung des Meßbereichs, inbesondere bei Geschwindigkeitsmessungen, und eine höhere Lichtausnutzung zu erbringen.

Die Lösung der Aufgabe ist Gegenstand des Anspruchs 1 und besteht darin, daß mit dem ersten Lichtleiterabschnitt ein polarisationsdrehender und dabei frequenzversetzender Konverter integriert ist, der ein elektrisch erregter Wellenleiter einer akustischen Oberflächenwelle ist, der zu dem ersten Lichtleiterabschnitt gleichlaufend angeordnet ist, und daß zwischen dem Kristall und dem Reflektor eine 1/4-Wellenlängenplatte angeordnet ist und dem vierten Lichtleiterabschnitt ein Polarisationsteiler nachgeordnet ist, an dessen beiden Ausgängen jeweils einer der Lichtdetektoren angeordnet ist.

Der besondere Vorteil der vorstehenden Vorrichtung besteht darin, daß das eine akusto-optische Bauelement zwei elektro-optische Bauelemente ersetzt. Durch die Lichtkonversion in diesem Bauelement entstehen aus dem eingespeisten Licht einer ersten Polarisation zwei etwa gleiche Anteile verschiedener Polarisation, die in dem Polarisationsteiler getrennt werden und dann nach außen weitergeführt werden und nach ihrer äußeren Reflektion, Veränderung und Polarisationswandlung wieder in dem gleichen Bauelement verlustfrei zusammengeführt und zur Auswertung geleitet werden. Der integrierte optische Schaltkreis, der Gegenstand des Anspruchs 15 ist, ist äußerst einfach aufgebaut. Der Referenzanteil läßt sich von dem Nutzanteil durch einen bekannten Polarisationsteiler in einfacher Weise trennen. Der eine Oberflächenwelle erregende akustische Konverter benötigt eine sehr geringe Ansteuerleistung verglichen zu einem Serrodynmoduator. Die gesamte Lichtleistung wird entsprechend den Polarisationen aufgeteilt und dann voll nutzbar den beiden Detektoren zugeführt.

Eine noch weiter integrierte Ausführung besteht darin, daß ein weiterer, zu dem ersten gleichartiger, integrierter optischer Schaltkreis dem vierten Lichtleiterabschnitt nachgeschaltet ist und der Polarisationsteilung dient. In einem weiteren elektro-akustooptischen Konverter, der bevorzugt mit der gleichen Modulationsfrequenz wie der erste Konverter aber räumlich gesehen gegenläufig beaufschlagt ist, werden weitere versetzte Frequenzen mit jeweils geänderter Polarisation erzeugt, und in einem nachgeschalteten weiteren Polarisationsteiler werden diese Modulationsprodukte der beiden unterschiedlicher Frequenzen ihren Polarisationen gemäß getrennt und dann den beiden Detektoren zugeführt. Durch die erneute Frequenzversetzung entstehen unmittelbar auswertbare Detektorsignale, die eine Differenzfrequenz aus der doppelten Modulationsfrequenz und dem Frequenzversatz durch die Objektmodulation bei der Auswertung ergeben.

Die beiden gleichartigen Strukturen lassen sich entweder in Form von einzelnen integrierten Schaltkreisen hintereinander koppeln oder besonders vorteilhaft auf einem einzigen Kristall gemeinsam herstellen.

Eine weitere Vereinfachung der voll integrierten Ausführung besteht darin, daß der elektro-akustische Umsetzer beiden Konvertoren gemeinsam ist, wobei die akustische Oberflächenwelle nach beiden Seiten läuft und die beiden gegenläufigen Wellenbereiche jeweils mit einem der Lichtleiterabschnitte zusammenwirken.

Eine weitere Ausführungsform besteht darin, daß der zweite Konverter aus einem elektrooptischen Polarisationskonverter besteht, der aus einer kammartig ineinandergeschachtelten Elektrodenanordnung auf dem Lichtleiterabschnitt besteht. Dieser Konverter erzeugt keinen weiteren Frequenzversatz.

Vorteilhafte Ausgestaltungen sind in den Fig. 1 bis 4 dargestellt.

Fig. 1    zeigt eine erste einfachste Ausführung schematisch;

Fig. 2    zeigt einen vergrößerten Auschnitt zu Fig. 1;

Fig. 3    zeigt eine voll integrierte Ausführung schematisch, sowie eine zusammengesetzte Form;

Fig. 4    zeigt eine Ausführung mit einem gemeinsamen elektro-akustische, Umsetzer;

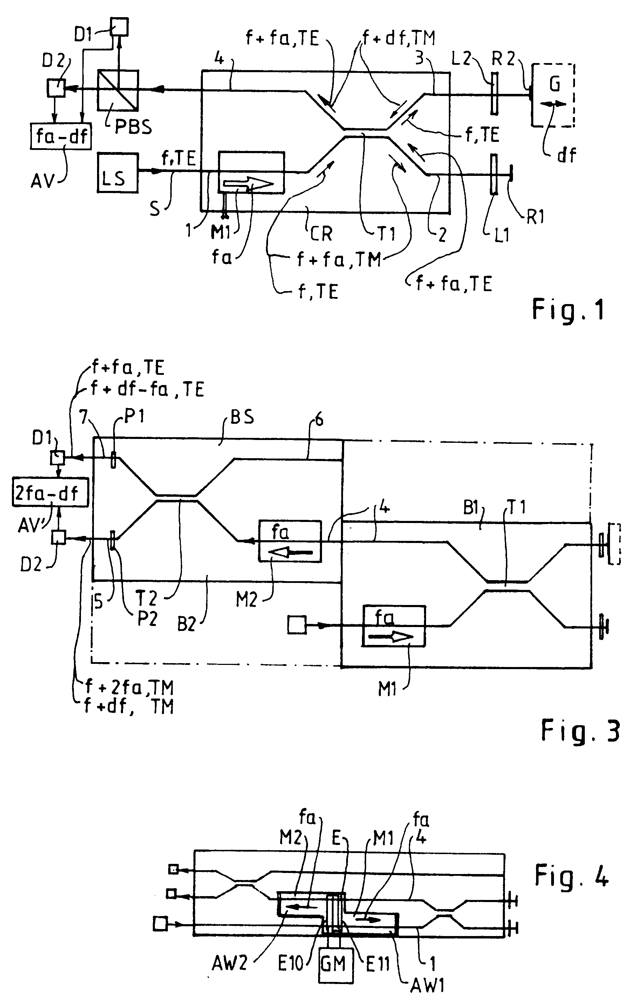

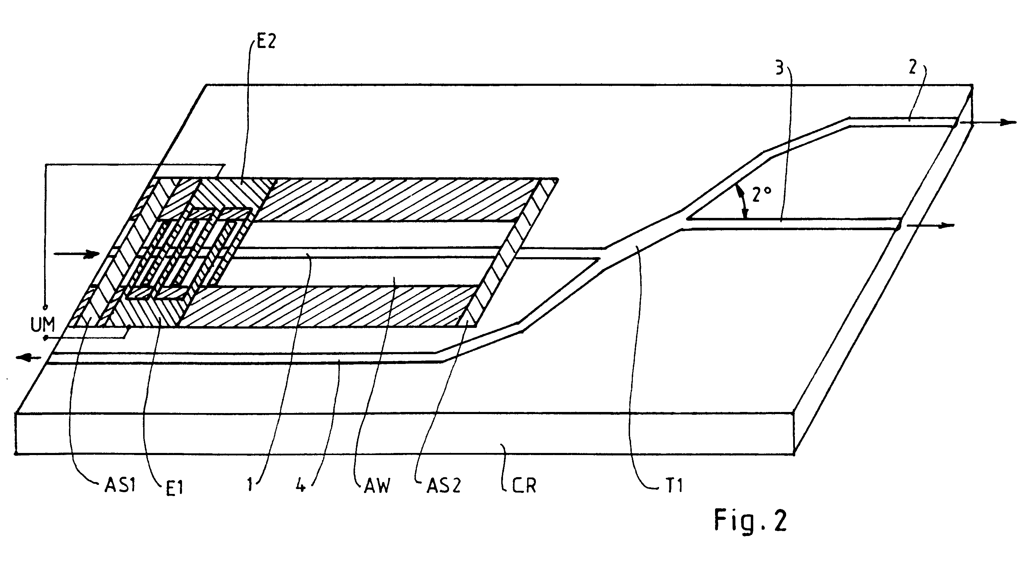

Figur 1 zeigt einen Lithiumniobatkristall (CR), in den zwei jeweils an dem Kristallrand beginnende und endende Lichtleitbahnen (1, 2; 3, 4) durch eine Titandotierung eingebracht sind. Diese Lichtleitbahnen sind in einem Polarisationsteiler (T1) verknüpft, so daß die beiden Lichtleitbahnen (1, 2; 3, 4) sich von dort in vier Lichtleiterabschnitte (1, 2; 3, 4) erstrecken. Der erste Lichtleiterabschnitt (1) ist randseitig von einem polarisierten Lichtstrahl (S) eines Lasers (LS) einer Frequenz (f) monomod gespeist, und der Strahl (S) durchläuft einen elektro-akusto-optischen Konverter (M1), dessen akustische Welle zum Licht gleichgerichtet läuft. Die Verhältnisse und die Frequenz des Konverters (M1) sind so gewählt, daß ausgangsseitig desselben die TE-Mode und die TM-Mode mit gleichem Leistungsanteil auftreten und der Anteil mit der geänderten Polarisation mit einer um die Modulationsfrequenz (fa) erhöhten Frequenz (f + fa) austritt. Beim Durchlaufen des Polarisationsteilers (T1) wechselt dann der unveränderte Lichtanteil in den dritten Lichtleiterabschnitt (3) über und der polarisationsgedrehte Lichtanteil läuft in den zweiten Lichtleiterabschnitt (2). Von diesem wird er randseitig des Kristalls (CR) durch eine 1/4-Wellenlängenplatte (L1) auf einen Reflektor (R1) geführt, von wo er durch die Platte (L1) mit geänderter Polarisation in den zweiten Lichtleiterabschnitt (2) zurückkehrt und dann den Polarisationsteiler (T1) kreuzend durchläuft und in den vierten Lichtleiterabschnitt (4) eintritt, von wo er randseitig austritt. Anschließend an die dritten und vierten Lichtleiterabschnitte (3, 4) können in bekannter Weise Lichtleitfasern angeschlossen sein, um externe Meßpunkte zu erreichen.

Der dritte Lichtleiterabschnitt führt den Lichtanteil randseitig auf eine zweite 1/4-Wellenlängenplatte (L2) hinter der er auf einen Reflektor (R2) auf dem zu vermessenden Objekt (G) fällt, von dem der reflektierte Anteil, der mit einem entsprechend einer Bewegung des Objektes (G) auftretenden Frequenzversatz (df) oder mit einem Phasenversatz bezüglich einer Referenzphasenlage beaufschlagt ist, durch die Platte (L2) mit geänderter Polarisation und einer geänderten Frequenz (f + df) in den dritten Lichtleiterabschnitt (3) zurücktritt, von wo er nach Durchlaufen des Polarisationsteilers (T1) ebenfalls in den vierten Lichtleiterabschnitt (4) weiterläuft. Prinzipiell treten hierbei keine optischen Verluste auf.

Am randseitigen Ausgang des vierten Lichtleiterabschnitts (4) treten die beiden reflektierten und wieder vereinigten Lichtanteile in einen üblichen Polarisationsmischer und -teiler (PBS) ein, dem an seinen beiden Ausgängen jeweils ein Photodetektor (D1, D2) nachgeschaltet ist. An die vier Lichtleiterabschnitte (1, - 4) sind die jeweiligen Polarisationen (TE, TM), die jeweiligen Frequenzen (f; f + fa; f + df) und die zugehörigen Richtungen angezeichnet. Die 1/4-Wellenlängenplatten (L1, L2) dienen der Polarisationsdrehung ohne Frequenzversatz. Dadurch können die in die Lichtleiter reflektierten Wellen den Polarisationsteiler (T1) in umgekehrter Richtung passieren und auf dem vierten Lichtleiterabschnitt (4) verlassen. Um den Frequenzversatz (df), der durch den Dopplereffekt am Objekt (G) auftritt, messen zu können, ist der externe Strahlteiler (PBS), der eine 45°-Orientierung zur Wellenleiter-Austrittsoberfläche aufweist, vorgesehen, der die verschieden polarisierten Lichtanteile so mischt, daß mit den Detektoren (D1, D2) in der Auswertevorrichtung (AV) eine Differenzfrequenz (fa - df) zwischen der Modulationsfrequenz (fa) und dem Frequenzversatz (df) zu ermitteln ist.

Vorteilhaft ist der Kristall (CR) ein X-Schnitt wobei die Ausbreitungsrichtung der Wellen in Y-Richtung gelegt ist, da diese akustische Oberflächenwelle sehr leicht und leistungsarm anregbar ist, und eine gute Phasenanpassung der optischen und der akustischen Wellen zu erreichen ist. Es ist auch ein Y-Schnitt verwendbar, wobei die Wellenausbreitung in X-Richtung gewählt wird.

Wird bei einem X-Schnitt das Interferometer mit Licht der Wellenlänge von ca. 0.0015 mm betrieben, so wird zweckmäßig in dem Konverter akusto-optisch ein Frequenzversatz von ca. 180 MHz erzeugt. Dabei sind die Verhältnisse so gewählt, daß etwa die Hälfte des Lichtes in der geänderten Polarisation austritt. Bei einer Abwandlung der Vorrichtung für eine kürzere Wellenlänge wird zweckmäßig ein größerer Frequenzversatz vorgesehen.

Figur 2 zeigt in vergrößerter, nicht maßstabs- und winkeltreuer, schematischer Form die integrierten Strukturen auf dem Kristall (CR). Koaxial zu dem ersten Lichtleiterabschnitt (1) ist als Konverter (M1) ein akustischer Oberflächenwellenleiter (AW) ausgebildet, der an den beiden Enden mit Absorberstreifen (AS1, AS2) abgedeckt ist. An einem Ende des Wellenleiters (AW) sind als Erreger kammartig ineinander verzahnte Elektroden (E1, E2) aufgebracht, denen die Modulationsspannung (UM) zugeführt ist. Je nachdem an welchem Ende des akustischen Wellenleiters (AW) der Erreger angeordnet ist, läuft die akustische Welle mit oder gegen die Lichtwellen, so daß die Frequenz des konvertierten und in der Mode geänderten Lichtanteils demgemäß in der Frequenz um die akustische Frequenz (fa), erhöht bzw. erniedrigt ist. Im vorliegenden Fall ist beispielsweise die TE-Mode eingespeist, und eine erhöhte Frequenz (f + fa) tritt in der TM-Mode aus. Der konvertierte Lichtanteil hängt bei einer gegebenen akustischen Frequenz und Lichtwellenlänge von der Länge der Interaktion der Wellen ab. Der konvertierte Lichtanteil kann für die Anwendung im Interferometer beispielsweise gleich dem unverändert durchlaufenden Lichtanteil gewählt werden.

Der akustische Wellenleiter (AW) ist beispielsweise durch eine beidseitig angeordnete Titandiffusion mit 1600 Angström, 1060 °C und 31 h erzeugt und 0,11 mm breit und 10 mm lang. In seiner Mitte ist koaxial der schmale Lichtleiter durch eine Titandiffusion von 1000 Angström, 1030 °C und 9 h ausgebildet. Die Absorberstreifen (AS1, AS2) sind in der Wellenausbreitungsrichtung beispielsweise 1 mm breite dämpfende Kunststoffstreifen. Der Polarisationsteiler (T1) besteht aus einem Doppelmode-Lichtwellenleiter doppelter Weite verglichen zu der Wette der Monomode-Lichtleiter, die z.B. 0,007 mm beträgt. Die Länge des Teilerabschnittes beträgt beispielsweise 0,490 mm. Die Divergenz der Lichtleiterbahnen vor und hinter dem Polarisationsteiler (T1) beträgt beispielsweise 2 Winkelgrade. Bei einer Lichtwellenlänge in Luft von 0,00152 mm konnte bei den vorstehenden Verhältnissen mit einer elektrischen Erregungssignalleistung von 70 mW eine völlige Polarisationskonversion erreicht werden. Für eine erwünschte Aufspaltung in zwei Lichtanteile war eine entsprechend geringere Modulationsleistung erforderlich.

Das in Figur 2 gezeigte Bauelement läßt sich wegen der durch die Modulationsfrequenz und/oder -leistung bestimmbare Lichtverteilung auf die beiden Ausgänge der Lichtleiterabschnitte (2, 3) auch anderweitig als steuerbarer Lichtumschalter oder -verteiler verwenden und stellt eine eigene Erfindung dar.

Figur 3 zeigt in dem strichpunktierten Rahmen eine völlig integrierte Interferometeranordnung, bei der zwei der Kombiantionen jeweils eines Konverters (M1, M2) mit einem nachgeordneten Polarisationsteiler (T1, T2) kaskadiert sind. Der ersten Baustein (B1) ist mit den vierten Lichtleiterabschnitt (4) an den zweiten Baustein (B2) angeschlossen. Dort wird in einem weiteren Konverter (M2) gleicher Art wie der erste, der ebenfalls in der Lichtlaufrichtung moduliert, also räumlich gesehen in umgekehrter Richtung als der erste Konverter (M1) akustisch beaufschlagt ist, eine Konversion vorzugsweise mit der gleichen Modulationfrequenz (fa) vorgenommen. Hierdurch entstehen aus den beiden ankommenden Lichtanteilen weitere Modulationsprodukte (f + 2fa; f + df - fa) mit einem zweifachen Frequenzversatz und einem Differenzfrequenzversatz, wobei von dem Frequenzversatz (df) durch das Meßobjekt die akustische Frequenz (fa) subtrahiert ist. Im nachfolgenden Polarisationsteiler (T2) werden im durchlaufend angeschlossenen fünften Lichtleiterabschnitt (5) die Lichtanteile der einen Polarisation (TM) und im gekreuzt angeschlossenen siebten Lichtleiterabschnitt (7) die übrigen Lichtanteile der anderen Polarisation (TE) sortiert und zusammengefaßt weitergeleitet und so in die Lichtdetektoren (D1, D2) geleitet, die hinter den Lichtaustritten an der Kristallkante angeordnet sind. Ein sechster Lichtleiterabschnitt (6) bleibt ungenutzt. Die Auswertung der Detektorsignale in der Auswertevorrichtung (AV') ergibt eine Differenzfrequenz (2fa - df).

Die Auswertung erfolgt in bekannter Weise abhängig davon, ob eine Geschwindigkeitsmessung des Objektes oder eine Vibrationsmessung oder eine Anemometermessung erfolgt durch eine Frequenzmessung, wobei eine Spektraldarstellung vorteilhaft ist. Bie den beispielsweise angegebenen Verhältnissen kann eine Geschwindigkeitsmessung bis zu 55 m/s erfolgen. Bei einer Verschiebungsmessung ist eine Phasenauswertung bevorzugt, da diese eine hohe Auflösung erbringt.

Der Referenzlichtweg und der Nutzlichtweg sind völlig gleichartig; dadurch ist die Anordnung weitgehend temperaturunabhängig. An den Ein- und Auskoppelstellen sind in bekannter Weise Anpassungslinsen eingebracht, die nicht dargestellt sind. Auf dem Kristall sind optional integrierte Polarisatoren (P1, P2) vor den detektorseitigen Lichtaustritten angeordnet, die den Störabstand verbessern.

Figur 4 zeigt eine vereinfachte Ausführung der Vorrichtung schematisch, bei der ein Erreger (E) der akustischen Wellen für beide Konverter (M1, M2) gemeinsam vorgesehen ist, von welchem sich nach beiden Seiten die Wellen in dem Wellenleiter ausbreiten. Der eine Wellenbereich (AW1) ist mit dem ersten Lichtleiterabschnitt (1) zusammengeführt. Der andere Wellenbereich (AW2) verläuft mit dem vierten Lichtleiterabschnitt (4) gemeinsam. Die Erregerelektroden (E10, E11) werden von dem Frequenzgenerator (GM) mit einer Spannung mit der akustischen Frequenz gespeist.

Bei der gezeigten Vorrichtung ist es prinzipiell bedeutungslos, welche Polarisation eingangsseitig eingespeist wird, da dann sämtliche Polarisationen entspechend umgekehrt sind. Ebenso ist es gleichgültig, ob die akustischen Konverter jeweils gleichlaufend zur Lichtwelle oder entgegengesetzt laufend ausgebildet sind; sie müssen nur beide einander in der Zuordnung entsprechen. Bei einer Gegenläufigkeit der Wellen kehrt sich die Richtung der Frequenzverschiebung (fa) der konvertierten Lichtwellen jeweils um.

**Patentansprüche**

1. Heterodyninterferometer
    - mit einem Lithiumniobatkristall (CR) auf, dem zwei monomode Lichtleiterbahnen (1, 2; 3, 4) ausgebildet sind, die über einen Polarisationsteiler (T1) miteinander verbunden sind und so jeweils zwei Lichtleiterabschnitte (1, 2; 3, 4) bilden,

- - so daß ein erster Lichtleiterabschnitt (1) als der eine Lichtleiterabschnitt der ersten Lichtleiterbahn (1, 2) und ein vierter Lichtleiterabschnitt (4) als der eine Lichtleiterabschnitt der zweiten Lichtleiterbahn (3, 4) sich einerseits des Polarisationsteilers (T1) erstrecken, von dem sich andererseits der zweite Lichtleiterabschnitt (2) als der andere Lichtleiterabschnitt der ersten Lichtleiterbahn (1, 2) und der dritte Lichtleiterabschnitt (3) als der andere Lichtleiterabschnitt der zweiten Lichtleiterbahn (3, 4) modenteilend angeschlossen erstrecken,

- mit einem Laser (LS) für polarisiertes monomodes Licht der mit dem ersten Lichtleiterabschnitt (1) verbunden ist,

- - der ein akustischer Oberflächenwellenleiter eines Konverters (M1) ist, der unter einer gleichgerichtet parallellaufenden akustischen Oberflächenwellenleitung (AW) mit Erregerelektroden (E1, E2), die mit einem Modulationsfrequenzgenerator (GM) für eine Modulationsfrequenz (fa) verbunden sind, polarisationsdrehend und frequenzversetzend gekoppelt angeordnet ist,

- mit einer ausgangsseitig des zweiten Lichtleiterabschnittes (2) angeordneten 1/4-Wellenlängenplatte (L1) und einem dieser nachgeordneten Reflektor (R1),

- mit einem dem vierten Lichtleiterabschnitt (4) nachgeordneten Polarisationsteiler (PBS, BS) an dessen beiden Ausgängen jeweils ein Lichtdetektor (D1, D2) angeordnet ist, dessen Ausgänge mit einer Auswertevorrichtung (AV) verbunden sind, die ein Differenzfrequenzsignal aus den beiden Lichtdetektorsignalen abgibt, und

- mit einer ausgangsseitig des dritten Lichtleiterabschnittes (3) angeordneten 1/4-Wellenlängenplatte (L2), aus der das Licht anstreten und ggf. einem reflektierenden Meßobjekt Zugeführt werden kann.

2. Heterodyninterferometer nach Anspruch 1, dadurch gekennzeichnet, daß der Polarisationsteiler (PBS) ein Strahlteiler ist, der eine 45°-Orientierung zur gegenüberliegenden Wellenleiteraustrittsoberfläche des vierten Lichtleiterabschnittes (4) aufweist, so daß in der Auswertevorrichtung (AV) das resultierende Differenzfrequenzsignal mit einer Frequenz gemäß der Differenz (fa - df) zwischen der Modulationsfrequenz (fa) und einem Frequenzversatz (df), der gemäß einer Abstandsveränderung des Meßobjektes (G) auftritt, entsteht.

3. Heterodyninterferometer nach Anspruch 1, dadurch gekennzeichnet, daß der Polarisationsteiler (BS) eine integrierte elektro-akusto-optische Baugruppe (B2) ist, die aus einem zweiten Polarisationsteiler (T2) besteht, an den mindestens drei Lichtleiterabschnitte (4, 5, 7) angeschlossen sind, von denen einer der vierte Lichtleiterabschnitt (4) des ersten Polarisationsteilers (T1) ist, der durch einen zweiten akustisch-optischen Wellenleiter-Konverter (M2) geführt ist, der Steuerelektroden (E10, E11) hat, die mit einem Modulationsfrequenzgenerator (GM) für die Modulationsfrequenz (fa) verbunden sind, daß er in der gleichen Richtung wie der erste Konverter (M1) frequenzversetzend ist, und daß die beiden ausgangsseitigen Lichtleiterabschnitte (5, 7) des zweiten Polarisationsteilers (T2) randseitig des Kristalles jeweils auf einen der beiden Detektoren (D1, D2) führen, aus deren Lichtdetektorsignalen in der Auswertevorrichtung (AV') das resultierende Differenzfrequenzsignal mit einer Differenzfrequenz (2fa - df) zwischen einem Zweifachen (2fa) der Modulationsfrequenz und einem Frequenzversatz (df), der gemäß einer Abstandsveränderung des Meßobjektes (G) auftritt, entsteht.

4. Heterodyninterferometer nach Anspruch 3, dadurch gekennzeichnet, daß der erste Konverter (M1) zusammen mit dem ersten Polarisationsteiler (T1) auf einem ersten Baustein (B1) angeordnet ist und der zweite Konverter (M2) zusammen mit dem zweiten Polarisationsteiler (T2) auf einem zweiten Baustein (B2) angeordnet ist und diese Bausteine (B1, B2) über den vierten Lichtleiterabschnitt (4) verkoppelt sind.

5. Heterodyninterferometer nach Anspruch 1, dadurch gekennzeichnet, daß der Polarisationsteiler (BS) eine integrierte elektro-optische Baugruppe (B2) ist, die aus einem zweiten Polarisationsteiler (T2) besteht, an den mindestens drei Lichtleiterabschnitte (4, 5, 7) angeschlossen sind, von denen einer der vierte Lichtleiterabschnitt (4) des ersten Polarisationsteilers (T1) ist, der durch einen polarisationsdrehenden elektro-optischen Konverter (M2) geführt ist, der Steuerelektroden (E10, E11) hat, die mit einem Modulationsfrequenzgenerator (GM) verbunden sind, und daß die beiden ausgangsseitigen Lichtleiterabschnitte (5, 7) des zweiten Polarisationsteilers (T2) randseitig des Kristalles jeweils auf einen der beiden Detektoren (D1, D2) führen, aus deren Detektorsignalen die Auswertevorrichtung (AV') eine Differenzfrequenz (fa - df) zwischen der Modulationsfrequenz und einem Frequenzversatz (df), der gemäß einer Abstandsveränderung des Meßobjektes (G) auftritt, entsteht.

6. Heterodyninterferometer nach Anspruch 4 oder 5, dadurch gekennzeichnet, daß die beiden Konverter (M1, M2) und die beiden Polarisationsteiler (T1, T2) auf einem Kristall (CR) integriert sind.

7. Heterodyninterferometer nach Anspruch 6, dadurch gekennzeichnet, daß die beiden Konverter (M1',M2') einen gemeinsamen elektro-akustischen Erreger (E) aufweisen und der akustische Wellenleiter (AW1, AW2) sich von dem Erreger (E) aus nach zwei Seiten entgegengesetzt erstreckt, und mit jeweils einem der beiden so gebildeten Wellenleiterbereiche (AW1, AW2) einer der Lichtleiterabschnitte (1, 4) der Konverter (M1, M2) zusammenlaufend angeordnet ist.

8. Heterodyninterferometer nach einem der vorstehenden Ansprüche, dadurch gekennzeichnet, daß der elektro-akustische Wandler der Konverter (M1, M2) jeweils aus einer kammartig ineinanderliegenden Elektrodenanordnung (E1, E2) als einem Erreger besteht, die auf oder vor dem akustischen Oberflächenwellenleiter (AW), der mittels einer begrenzenden Titandiffusion in die Kristalloberfläche eingebracht ist und endseitig jeweils mit akustischen Dämpfungsstreifen (AS1, AS2) abgeschlossen ist, angeordnet ist und deren Elektroden (E1, E2) mit einem Modulationsfrequenzgenerator (MG) verbunden sind.

9. Heterodyninterferometer nach Anspruch 8, dadurch gekennzeichnet, daß der elektro-akustische Wandler etwa 0,11 mm breit und etwa 10 mm lang ist und die Dämpfungsstreifen (AS1, AS2) etwa 1 mm der Wellenlaufrichtung bedecken.

10. Heterodyninterferometer nach einem der vorstehenden Ansprüche, dadurch gekennzeichnet, daß die Polarisationsteiler (T1, T2) jeweils aus einem Zweimodenlichtleiter etwa doppelter Breite als die Breite der daran anschließenden monomoden Lichtleiterabschnitte (1, 2, 3, 4) oder aus einem eng benachbarten Teilbereich der beiden Lichtleiter (1, 2; 3, 4) besteht.

11. Heterodyninterferometer nach Anspruch 10, dadurch gekennzeichnet, daß die Polarisationsteiler (T1, T2) etwa 0,0014 mm breit und etwa 0,490 mm lang sind.

12. Heterodyninterferometer nach Anspruch 10 oder 11, dadurch gekennzeichnet, daß der Kristall (CR) ein X-Schnitt ist und die Wellenausbreitungsrichtung im wesentlichen dessen Y-Richtung ist oder daß der Kristall (CR) einen Y-Schnitt hat und die Wellenausbreitungsrichtung die X-Richtung ist und daß die akustische Frequenz (fa) zur Lichtwellenänge und den akustischen und optischen Ausbreitungsgrößen des Kristalles (CR) derart in Beziehung stehend gewählt sind, daß eine Phasenanpassung bei der akusto-optischen Wechselwirkung auftritt.

13. Heterodyninterferometer nach Anspruch 12, dadurch gekennzeichnet, daß der Laser (LS) für Licht (S) einer Wellenlänge von etwa 0,0015 mm ausgebildet ist und der Modulationsfrequenzgenerator (GM) für eine Modulationsfrequenz (fa) von etwa 180 MHz ausgebildet ist und der Kristall (CR) einen X-Schnitt aufweist.

14. Heterodyninterferometer nach einem der vorstehenden Ansprüche, dadurch gekennzeichnet, daß in mindestens einem der detektorseitigen Lichtleiterabschnitte (5, 7) ein integrierter optischer Polarisator (P1, P2) angeordnet ist.

15. Integriertes elektro-akusto-optisches Bauelement (B1, B2) bestehend aus
    - einem Lithiumniobatkristall (CR) mit mindestens einer Anordnung aus einem Polarisationsteiler (T1) und einem elektro-akusto-optischen Konverter (M1),
    - - der aus einer akustischen Oberflächenwellenleitung (AW) besteht, die parallel über einen ersten monomoden Lichtleiterabschnitt (1) einer ersten Lichtleiterbahn (1, 2) polarisationsdrehend und frequenzversetzend akustisch gekoppelt angeordnet ist und eine elektro-akustische Erregerelektrodenanordnung (E1, E2) trägt, die mit einem Modulationsspannungsgenerator (MD) verbunden ist,
    - und wobei die erste Lichtleiterbahn (1, 2) mit einer zweiten monomoden Lichtleiterbahn (3, 4) in dem Polarisationsteiler (T1) verbunden ist,
      - - wobei deren jeweils davon andererseits als der erste Lichtleiterabschnitt (1) abgehenden zweite und dritte Lichtleiterabschnitte (2, 3) der beiden Lichtleiterbahnen (1, 2; 3, 4) an den Polarisationsteiler (T1) modenteilend angeschlossen sind.

**Claims**

1.  Heterodyne interferometer
    -   with a lithium niobate crystal (CR) on which two single-mode optical waveguides (1, 2; 3, 4) are formed which are interconnected via a polarisation splitter (T1) and so respectively constitute two optical fibre sections (1, 2; 3, 4),
        - - with the result that a first optical fibre section (1) as one optical fibre section of the first optical waveguide (1, 2), and a fourth optical fibre section (4), as one optical fibre section of the second optical waveguide (3, 4), extend on one side from the polarisation splitter (T1), from which on the other side there extend, connected in mode-splitting manner, the second optical fibre section (2) as the other optical fibre section of the first optical waveguide (1, 2), and the third optical fibre section (3) as the other optical fibre section of the second optical waveguide (3, 4),
    -   with a laser (LS) for polarised single-mode light, connected to the first optical fibre section (1)
        - - which is an acoustic surface waveguide of a converter (M1) arranged so as to be coupled in polarisation-rotating and frequency-shifting manner below an acoustic surface waveguide (AW) running parallel thereto in the same direction and having excitation electrodes (E1, E2) which are connected to a modulation frequency generator (GM) for a modulation frequency (fa),
    -   with a 1/4 wavelength plate (L1) arranged on the output side of the second optical fibre section (2) and with a reflector (R1) arranged thereafter,
    -   with a polarisation splitter (PBS, BS) arranged after the fourth optical fibre section (4), there being arranged at each of the two outputs of said polarisation splitter (PBS, BS) a light detector (D1, D2) whose outputs are connected to an evaluation device (AV) which delivers a differential frequency signal from the two light detector signals, and
    -   with a 1/4 wavelength plate (L2) arranged on the output side of the third optical fibre section (3) and from which the light can exit and if appropriate can be supplied to a reflective device under test.

2.  Heterodyne interferometer according to claim 1, characterised in that the polarisation splitter (PBS) is a beam splitter, which displays a 45° orientation to the opposite-lying wave guide output surface of the fourth optical fibre section (4), with the result that in the evaluation device (AV) the differential frequency signal obtained has a frequency in accordance with the differential (fa - df) between the modulation frequency (fa) and a frequency shift (df) produced in accordance with a change in the spacing of the device under test (G).

3.  Heterodyne interferometer according to claim 1, characterised in that the polarisation splitter (BS) is an integrated electro-acousto-optical module (B2) consisting of a second polarisation splitter (T2), to which at least three optical fibre sections (4, 5, 7) are connected, of which one is the fourth optical fibre section (4) of the first polarisation splitter (T1), which is led through a second acousto-optical waveguide converter (M2) which has control electrodes (E10, E11) connected to a modulation frequency generator (GM) for the modulation frequency (fa), that said polarisation splitter (B2) shifts the frequency in the same direction as the first converter (M1), and that the two output-side optical fibre sections (5, 7) of the second polarisation splitter (T2) on the crystal's edge each lead to one of the two detectors (D1, D2) from whose optical detector signals in the evaluation device (AV') the differential frequency signal obtained has a differential frequency (2fa - df) between twice the modulation frequency (2fa) and a frequency shift (df) produced in accordance with a change in the spacing of the device under test (G).

4.  Heterodyne interferometer according to claim 3, characterised in that the first converter (M1) together with the first polarization splitter (T1) are arranged on a first module (B1) and the second converter (M2) together with the second polarisation splitter (T2) are arranged on a second module (B2), and these modules (B1, B2) are coupled via the fourth optical fibre section (4).

5.  Heterodyne interferometer according to claim 1, characterised in that the polarisation splitter (BS) is an integrated electro-optical module (B2) consisting of a second polarisation splitter (T2), to which at least three optical fibre sections (4, 5, 7) are connected, of which one is the fourth optical fibre section (4) of the first polarisation splitter (T1), which is led through a polarisation-rotating electro-optical converter (M2) having control electrodes (E10, E11) which are connected to a modulation frequency generator (GM), and that the two output-side optical fibre sections (5, 7) of the second polarisation splitter (T2) on the crystal's edge each lead to one of the two detectors (D1, D2) from whose detector signals the evaluation device (AV') detects a differential frequency (fa - df) between the modulation frequency and a frequency shift (df) produced in accordance with a change in the spacing of the device under test (G).

6. Heterodyne interferometer according to claim 4 or 5, characterised in that both converters (M1, M2) and both polarisation splitters (T1, T2) are integrated on one crystal (CR).

7. Heterodyne interferometer according to claim 6, characterised in that the two converters (M1', M2') have a common electro-acoustic exciter (E) and the acoustic waveguide (AW1, AW2) extends from the exciter (E) out to two opposing sides, and one of the optical fibre sections (1, 4) of the converters (M1, M2) runs together with a respective one of the two waveguide regions (AW1, AW2) so formed.

8. Heterodyne interferometer according to one of the foregoing claims, characterised in that the electro-acoustic converter of the converters (M1, M2) in each case consists of a comb-like, interleaved arrangement of electrodes (E1, E2) as an exciter which is placed on or in front of the acoustic surface waveguide (AW), which is incorporated into the crystal surface by means of limiting titanium diffusion, and terminated at the respective ends with acoustic damping strips (AS1, AS2), and whose electrodes (E1, E2) are connected to a modulation frequency generator (MG).

9. Heterodyne interferometer according to claim 8, characterised in that the electro-acoustic converter is approximately 0.11 mm wide and approximately 10 mm long, and the damping strips (AS1, AS2) cover approximately 1 mm of the wave direction.

10. Heterodyne interferometer according to one of the foregoing claims, characterised in that the polarisation splitters (T1, T2) each consist of a double-mode optical fibre of about double the width of the single-mode optical fibre sections (1, 2, 3, 4) connected to it, or of a closely neighbouring partial area of the two optical waveguides (1, 2; 3, 4).

11. Heterodyne interferometer according to claim 10, characterised in that the polarisation splitters (T1, T2) are approximately 0.0014 mm wide and approximately 0.490 mm long.

12. Heterodyne interferometer according to claim 10 or 11, characterised in that the crystal (CR) has an X-cut and the wave propagation is essentially in its Y-direction, or that the crystal (CR) has a Y-cut and the the wave propagation is in the X-direction, and that the acoustic frequency (fa) is chosen in relation to the light wave length and to the acoustic and optical propagation variables of the crystal (CR) such that a phase adjustment occurs in the acousto-optical interaction.

13. Heterodyne interferometer according to claim 12, characterised in that the laser (LS) is designed for light (S) with a wavelength of approximately 0.0015 mm and the modulation frequency generator (GM) is designed for a modulation frequency (fa) of approximately 180 MHz and the crystal (CR) has an X-cut.

14. Heterodyne interferometer according to one of the foregoing claims, characterised in that in at least one of the optical fibre sections (5,7) on the detector side there is an integrated optical polariser (P1, P2).

15. Integrated electro-acousto-optical component (B1, B2) consisting of
   - a lithium niobate crystal (CR) with at least one arrangement comprising a polarisation splitter (T1) and an electro-acousto-optical converter (M1)
     - - consisting of an acoustic surface wave guide (AW) arranged acoustically coupled and for polarisation-rotation and frequency-shifting in parallel via a first single-mode optical fibre section (1) of a first optical waveguide (1, 2) and bearing an arrangement of electro-acoustic excitation electrodes (E1, E2) connected to a modulation voltage generator (MD),
   - and the first optical waveguide (1, 2) being connected to a second single-mode optical waveguide (3, 4) in the polarisation splitter (T1),
     - - of which the respective second and third optical fibre sections (2, 3) of the two optical waveguides (1, 2; 3, 4) branching off on the other side from the first optical fibre section (1) are connected in mode-splitting manner to the polarisation splitter (T1).

**Revendications**

1. Interféromètre hétérodyne
   - avec un cristal au niobate de lithium (CR), sur lequel deux traces de guide de lumière monomodales (1, 2; 3, 4) sont formées, lesquelles sont reliées ensemble en passant par un séparateur de polarisasation (T1) et forment ainsi, chacune, deux tronçons de guide de lumière (1,2; 3; 4),
     - - de sorte qu'un premier tronçon de guide de lumière (1), qui est l'un des tronçons de guide de lumière de la première trace de guide de lumière (1, 2), et un quatrième tronçon de guide de lumière (4), qui est l'un des tronçons de guide de lumière de la deuxième trace de guide de lumière (3, 4), s'étendent d'un côté du séparateur de polarisation (T1), tandis que le deuxième tronçon de guide de lumière (2), qui est l'autre tronçon de guide de lumière de la première trace de guide de lumière (1, 2), et le troisième tronçon de guide de lumière (3), qui est l'autre tronçon de guide de lumière de la deuxième trace de guide de lumière (3, 4), sont disposés de l'autre côté du séparateur de polarisation (T1) et sont raccordé divisant le mode,
   - avec un laser (LS) pour lumière monomodale polarisée, lequel est relié au premier tronçon de guide de lumière (1),
     - qui est un guide d'ondes de surface d'un convertisseur (M1), qui est installé, couplé, assurant la rotation de la polarisation et le décalage des fréquences, sous une conduite d'ondes de surface (AW) acoustique, parallèle, équiaxe, avec électrodes d'excitation (E1, E2), qui sont reliées à un générateur de fréquence de modulation (GM) pour une fréquence de modulation (fa),
     - avec une plaquette quart d'onde (L1), disposée côté sortie du deuxième tronçon de guide de lumière (2) et en aval de laquelle un réflecteur (R1) est connecté,
     - avec un séparateur de polarisation (PBS, BS) en aval du quatrième tronçon de guide de lumière (4), à chacune des deux sorties duquel un détecteur de lumière (D1, D2) est disposé, les sorties de ces détecteurs étant raccordées à un dispositif d'évaluation (AV) qui lance un signal de fréquence de différence formé à partir des deux signaux des détecteurs de lumière, et
     - avec une plaquette quart d'onde (L2), disposée du côté de sortie du troisième tronçon de guide de lumière (3), de laquelle la lumière peut sortir et être conduite, le cas échéant, à un objet de mesure réfléchissant.

2. Interféromètre hétérodyne selon la revendication 1,
   caractérisé en ce que
   le séparateur de polarisation (PBS) est un dispositif de fractionnement de rayons, dont l'orientation par rapport à la surface opposée de sortie de guide d'ondes du quatrième tronçon de guide de lumière (4) est de 45 °, de sorte que, dans le dispositif d'évaluation (AV), le signal de fréquence de différence est engendré avec une fréquence conforme à la différence (fa - df) entre la fréquence de modulation (fa) et un décalage de fréquence (df), qui se produit selon la modification de la distance de l'objet de mesure (G).

3. Interféromètre hétérodyne selon la revendication 1,
   caractérisé en ce que
   le séparateur de polarisation (BS) est un module électroacousto-optique intégré (B2), consistant en un deuxième séparateur de polarisation (T2), auquel au moins trois tronçons de guide de lumière (4, 5, 7) sont raccordés, dont l'un est le quatrième tronçon de guide de lumière (4) du premier séparateur de polarisation (T1), qui est conduit par un deuxième convertisseur de guide d'ondes acousto-optique (M2) pourvu d'électrodes de commande (E10, E11), lesquelles sont reliées à un générateur de fréquence de modulation (GM) pour la fréquence de modulation (fa), de sorte qu'il décale la fréquence dans la même direction que le premier convertisseur (M1) et que les deux tronçons de guide de lumière côté sortie (5, 7) du deuxième séparateur de polarisation (T2) conduisent chacun, sur le bord du cristal, à l'un des deux détecteurs de lumière (D1, D2), à partir des signaux de détection desquels le signal de fréquence de distance est généré dans le dispositif d'évaluation (AV') avec une fréquence de différence (2fa - df) entre le double (2fa) de la fréquence de modulation et un décalage de fréquence (df), qui se produit conformément à une modification de la distance de l'objet de mesure (G).

4. Interféromètre hétérodyne selon la revendication 3,
   caractérisé en ce que

le premier convertisseur (M1) est installé en commun avec le premier séparateur de polarisation (T1) sur un premier module (B1), et que le deuxième convertisseur (M2) est installé en commun avec le deuxième séparateur de polarisation (T2 1) sur un deuxième module (B2), et que ces deux modules (B1, B2) sont accouplés par l'intermédiaire du quatrième tronçon de guide de lumière (4).

5. Interféromètre hétérodyne selon la revendication 1,
caractérisé en ce que
le séparateur de polarisation (BS) est un ensemble constitutif électro-optique intégré (B2) qui consiste en un deuxième séparateur de polarisation (T2), auquel au moins trois tronçons de guide de lumière (4, 5, 7) sont raccordés, dont l'un est le quatrième tronçon de guide de lumière (4) du premier séparateur de polarisation (T1), lequel est conduit par un convertisseur électro-optique (M2) qui assure la rotation de la polarisation et est pourvu d'électrodes de commande (E10, E11) reliées à un générateur de fréquence de modulation (GM) et que les deux tronçons de guide de lumière (5, 7) du deuxième séparateur de polarisation (T2), côté sortie, conduisent chacun, sur le bord du cristal, à l'un des deux détecteurs de lumière (D1, D2), à partir des signaux de détection desquels, une différence de fréquence (fa - df) entre la fréquence de modulation et un décalage de fréquence (df), se produisant en fonction de la modification de la distance de l'objet de mesure (G), est générée dans le dispositif d'évaluation (AV').

6. Interféromètre hétérodyne selon la revendication 4 ou 5,
caractérisé en ce que
les deux convertisseurs (M1, M2) et les deux séparateurs de polarisation (T1, T2) sont intégrés sur un cristal (CR).

7. Interféromètre hétérodyne selon la revendication 6,
caractérisé en ce que
les deux convertisseurs (M1', M2') possèdent un excitateur (E) électroacoustique commun) et que la conduite d'ondes acoustique (AW1, AW2) s'étend, à partir de l'excitateur (E), vers deux côtés opposés, et que les tronçons de guide de lumière (1, 4) des convertisseurs (M1, M2) sont disposés chacun en convergence respective avec l'une des deux zones de conduite d'ondes (AW1, AW2) ainsi formées.

8. Interféromètre hétérodyne selon l'une des revendication précédentes,
caractérisé en ce que
le transducteur électroacoustique des convertisseurs (M1, M 2) consiste en un dispositif à électrodes (E1, E2) à insersion mutuelle en forme de peigne, qui constitue l'excitateur et est disposé sur ou devant la conduite d'ondes de surface acoustique (AW), qui est mise en place dans la surface du cristal à l'aide d'une diffusion titanique limitative et se termine par des bandes d'amortissement (AS1, AS2), ses électrodes (E1, E2) étant reliées à un générateur de fréquence de modulation (MG).

9. Interféromètre hétérodyne selon la revendication 8,
caractérisé en ce que
le transducteur électroacoustique a une largeur d'environ 0,11 mm et une longueur d'environ 10 mm et que les bandes d'amortissement (AS1, AS2) recouvrent environ 1 mm de la direction de propagation des ondes.

10. Interféromètre hétérodyne selon la revendication 8,
caractérisé en ce que
les séparateurs de polarisation (T1, T2) consistent chacun en un guide de lumière bimodal, dont la largeur atteint à peu près le double de la largeur des tronçons de guide de lumière (1, 2, 3, 4) monodes y faisant suite, ou en une zone partielle voisine des deux guides de lumière (1, 2; 3, 4).

11. Interféromètre hétérodyne selon la revendication 10,
caractérisé en ce que
les séparateurs de polarisation (T1, T2) ont une largeur d'environ 0,0014 mm et une longueur d'environ 0,490 mm.

12. Interféromètre hétérodyne selon la revendication 10 ou 11,
caractérisé en ce que
le cristal (CR) présente une section X et que la direction de propagation des ondes en est essentiellement la direction Y ou que le cristal (CR) présente une section Y et que la direction de propagation des ondes est la direction X et que la fréquence acoustique (fa) est choisie, en fonction de la longueur d'ondes lumineuses et des grandeurs de propagation acoustiques et optiques du cristal (CR), de sorte qu'un accord de phase se produise sous l'effet de l'interaction acousto-optique.

13. Interféromètre hétérodyne selon la revendication 12,
caractérisé en ce que
le laser (LS) est conçu pour une lumière (S) d'une longueur d'ondes d'environ 0,0015 mm et que le générateur de fréquence de modulation (GM) est conçu pour une fréquence de modulation (fa) d'environ 180 MHz et que le cristall (CR) présente une section X.

14. Interféromètre hétérodyne selon l'une des revendications précédentes,
caractérisé en ce que
un polarisateur optique intégré (P1, P2) est prévu dans au moins l'un des tronçons de guide de lumière (5, 7), côté détecteur.

15. Elément de construction électroacousto-optique, intégré (B1, B2) composé
- d'un cristal au niobate de lithium (CR) avec, au moins, un dispositif comprenant un séparateur de polarisation (T1) et un convertisseur électroacousto-optique (M1),
- qui consiste en une conduite d'ondes de surface (AW), laquelle est disposée parallèlement, au-dessus d'un premier tronçon de guide de lumière (1) d'une trace de guide de lumière (1, 2), couplée acoustiquement, assurant la rotation de la polarisation et le décalage de la fréquence et est équipée d'une installation électro-acoustique d'électrodes excitatrices (E1, E2), qui est re-reliée à un générateur de modulation de tension modulatrice (MD),
- la première trace de guide de lumière (1, 2) étant reliée à une deuxième trace de guide de lumière monomodale (3, 4) dans le séparateur de polarisation (T1),
- le deuxième et le troisième tronçons de guide de lumière (2, 3) des trace de guide de lumière (1, 2; 3,4) étant raccordés au séparateur de polarisation (T1) en assurant une séparation de mode.

**Fig. 1**

**Fig. 3**

**Fig. 4**